# EUROPEAN PATENT APPLICATION

(11) **EP 2 371 339 A1**
(43) Date of publication of application: **05.10.2011**
(21) Application number: 10468001.2
(22) Date of filing: 02.04.2010
(51) Int. Cl.: A61H 3/06

(54) **Surroundings recognition & describing device for blind people**

(71) Applicant: POZOR 360 d.o.o., 4220 Skofja loka (SI)
(72) Inventor: Tomazic, Anton, 1230 Domzale (SI)

(57) **Abstract**

The Device is meant to have a role of the "virtual view" to help blind persons to better orient and navigate through and within their environments; to read text, and recognize people, objects, and environmental circumstances or conditions. It will convert video signal from the prospective viewpoint (miniature camera built in to glasses) of the blind user, into a corresponding voice explanation of the recognized text, persons and other objects, transmitting it to the user via ear phone.

## Description

PROBLEM TO BE SOLVED: **To help blind persons to better orient and navigate through and within their surroundings; to read text, and recognize people, objects, and environmental circumstances or conditions.**

SOLUTION: *This device converts video signal from the prospective viewpoint of the blind user, into a corresponding voice explanation of the recognized text, persons and other objects, transmitting it to the user via ear phone.*

The device is comprised of a frame (1) that is worn like a pair of eye glasses. It is fitted with a miniature camera in front (2) and ear phones on one side (3). The blind cane / walking stick (4) has a signal processing chip built-in (5), and is fitted with a special alarm handle (6), replaceable battery (7) and the I/O button (8). Additional processing power and memory capacity can be added by wirelessly linking (9) to a smart phone or mini-computer (10).

After the user switches the device ON, the image is continuously sent to and processed by digital signal processing system and a video coder. Any detected text, face or other recognized object is described by voice speech (in multiple languages) and sent to the ear phone of the user. It shall be possible to continually enhance and sharpen the performance of the device by using enhanced, and even customized software programs, available via download from the internet to computer or smart phone. These would be utilized to identify specific objects more uniquely important to the user, and offer corresponding alerts when recognized by video signal (such as inventory, currency or receipts for blind merchants or vendors, specific product items and merchandise for consumers, environmental concerns or preferences for athletes, etc). The user will be alerted by voice, sound or tone, and/or by physical impulse of the alarm handle.

Similarly, the optical character recognition (OCR) for text, face and object (or environmental) recognition capabilities will be continuously improved and updated, and will also be available through new driver software or utilities upgrades and downloads via internet.

Parts of this video processing system also offer continuous recording for the purpose of any evidence that may be used as material in case of an accident or special incident ("black box"). The data recorded (video clip of the last few minutes) are saved in memory for later use each time that the device is turned Off, or otherwise unexpectedly interrupted in its functioning. Eventually an automatic feed or upload to the internet will also allow immediate »offsite« virtual backup.

This device promises to help countless people who are blind, offering greater safety and ultimately independence - the security and freedom to negotiate their way through daily life, anywhere in the world.

Because of its popularly modem design, its multi-dimensional appeal and its universal, immediately understood usefulness and value, the device has very good market prospects.

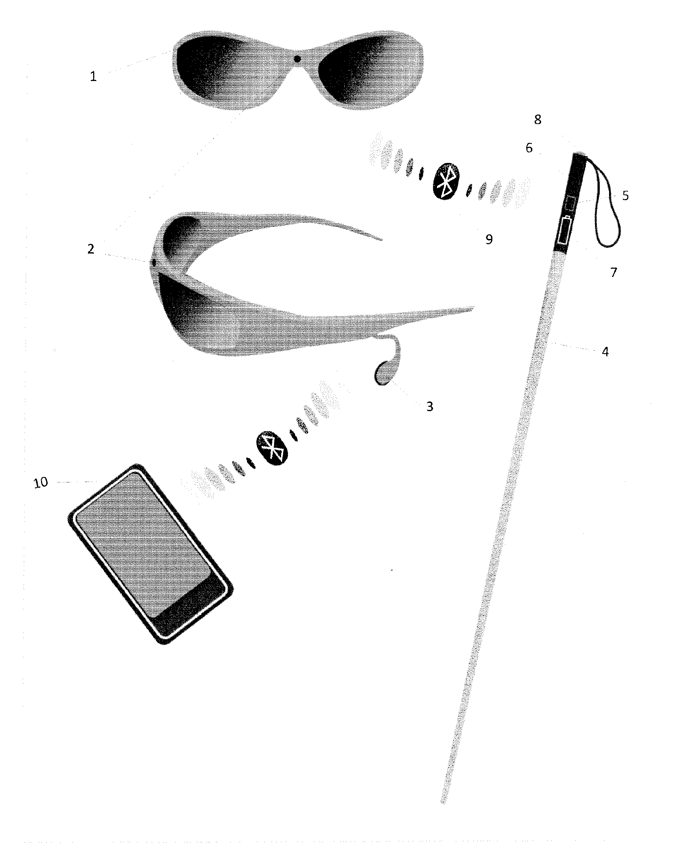

## Claims

1. miniature camera-equipped device to be worn as a pair of eye glasses (1), linked to an earpiece, audio receiver, and also wirelessly connected to a video signal processor installed in the handle of a blind cane / walking stick (4);
wherin
the video signal from the camera (2) is transmitted in real time to the processor (5), which will identify or recognize (via software) any text, face, or other object, and convert what is recognized as an audio signal (voice speech, sound or tone) to the user via ear phone (3).
